# EUROPÄISCHE PATENTSCHRIFT

(11) **EP 4 517 255 B1**
(45) Veröffentlichungstag und Bekanntmachung des Hinweises auf die Patenterteilung: **04.06.2025**
(21) Anmeldenummer: 23194139.4
(22) Anmeldetag: 30.08.2023
(51) Int. Cl.: G01B 11/25, G02B 3/00, G02B 1/00

(54) **AUFNAHME VON 3D-BILDDATEN MIT EINEM LICHTSCHNITTVERFAHREN**
CAPTURING 3D IMAGE DATA USING A LIGHT-CUTTING METHOD
CAPTURE DE DONNÉES D'IMAGE 3D À L'AIDE D'UN PROCÉDÉ DE DÉCOUPAGE DE LUMIÈRE

(43) Veröffentlichungstag der Anmeldung: 05.03.2025
(73) Patentinhaber: SICK AG, 79183 Waldkirch (DE)
(72) Erfinder: Bertz, Denise, 79183 Waldkirch (DE); Bleicher, Katharina, 79312 Emmendingen (DE); Ringwald, Siegfried, 79215 Elzach (DE); Edhammer, Jens, Linköping (SE); Murhed, Anders, Linköping (SE)

(56) Entgegenhaltungen:
- EP-A1- 4 124 884
- EP-A1- 4 141 497
- CN-A- 116 224 607
- US-A1- 2023 095 994
- US-B1- 10 746 529
- LIU XINYU ET AL: "A compact compressive hyperspectral imaging system based on metasurface", PROCEEDINGS OF THE SPIE, SPIE, US, vol. 12317, 4 January 2023 (2023-01-04), pages 123170Z - 123170Z, XP060171233, ISSN: 0277-786X, ISBN: 978-1-5106-5738-0, DOI: 10.1117/12.2643871

## Beschreibung

Die Erfindung betrifft eine Kamera und ein Verfahren zur Aufnahme von 3D-Bilddaten mit einem Lichtschnittverfahren nach dem Oberbegriff von Anspruch 1 beziehungsweise 15.

Bei einem Lichtschnittverfahren wird ein Lichtmuster in den Erfassungsbereich projiziert und aus den Verzerrungen mit einem Triangulationsverfahren auf das Höhenprofil der Objekte geschlossen. Besonders verbreitet ist die Lasertriangulation unter Verwendung einer Linienlichtquelle. Dabei erfolgt die Erfassung typischerweise in Relativbewegung, um die jeweiligen zweidimensionalen Höhenprofile zu 3D-Bilddaten zusammenzusetzen. In manchen Fällen wird zusätzlich der Pegel gemessen und damit ein Helligkeitsbild oder eine Textur erfasst.

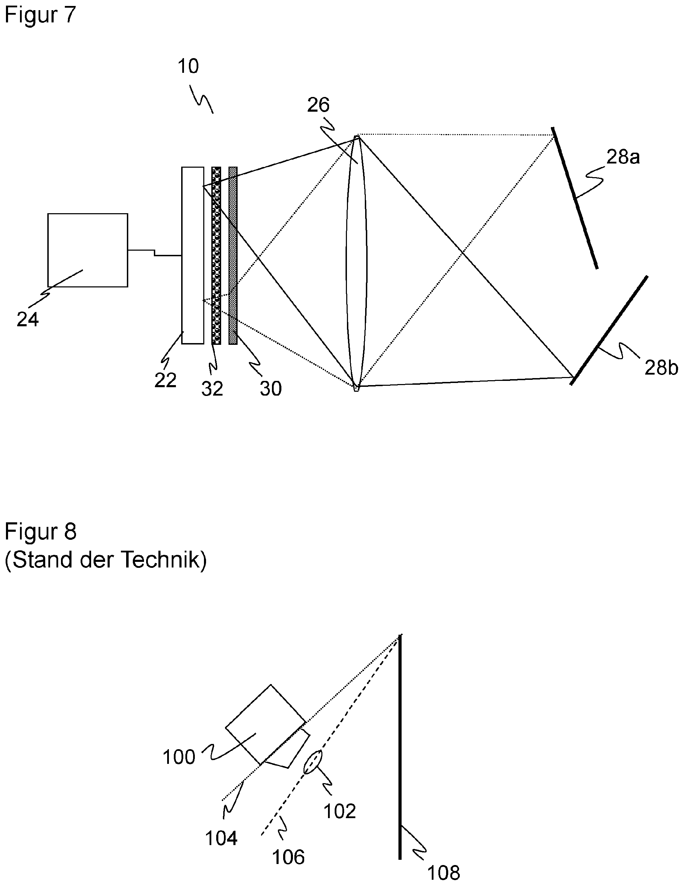

Figur 8 illustriert die bekannte Scheimpfluganordnung, in der eine Laserlinie über die gesamte Messreichweite scharf aufgenommen werden kann, um hochwertige 3D-Bilddaten zu gewinnen. Hierbei ist die Kamera 100 mit ihrem Objektiv 102 so aufgebaut, dass ihre Bildebene 104, die Objektivebene 106 und die Schärfe- oder Fokalebene 108 einander in einer gemeinsamen Geraden schneiden. Aufgrund der Scheimpfluganordnung und des Hauptstrahlwinkels des Objektivs 102 trifft dabei jedoch das Licht schräg auf den Bildsensor der Kamera 100. Der Effekt der Scheimpfluganordnung betrifft alle Pixel gleichermaßen, wohingegen der Hauptstrahlwinkel je Pixel individuelle Auswirkungen hat, nämlich bei einem zentralen Pixel noch bei 0° liegt und dann zu den Rändern des Bildsensors hin zunimmt. Die Scheimpfluganordnung mindert somit die Lichtausbeute, da wegen des schrägen Lichteinfalls nicht alles Licht das jeweilige Pixel erreicht. Außerdem sind in einer Scheimpfluganordnung aufgebaute Kameras recht baugroß.

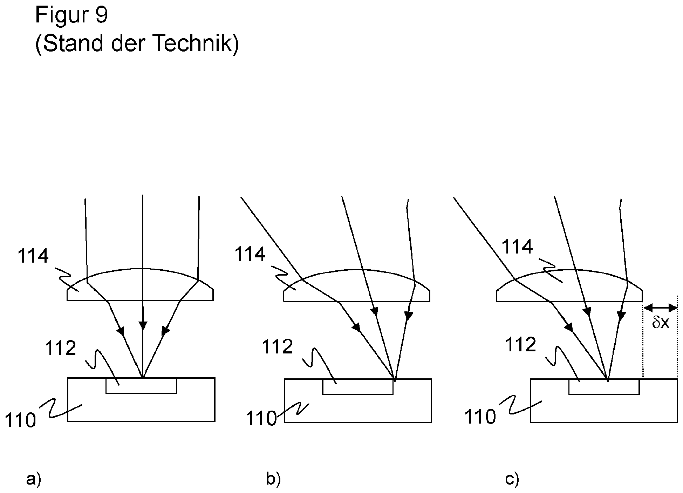

Figur 9 illustriert eine herkömmliche Lösung zur Erhöhung der Lichtempfindlichkeit eines Bildsensors. Jede der Figuren 9a-c zeigt ein beispielhaftes Pixel 110 mit dessen lichtempfindlicher Fläche 112 und einer vorgeordneten Mikrolinse 114. Bei senkrechtem Lichteinfall wie in Figur 9a wird dadurch das Licht auf die lichtempfindliche Fläche 112 gebündelt. Bei schrägem Lichteinfall wie in Figur 9b kommt es jedoch zu einer seitlichen Verschiebung, die zu einem teilweisen oder völligen Verfehlen der lichtempfindlichen Fläche 112 führt. Zum Ausgleich kann wie in Figur 9c die Mikrolinse 114 gegenüber der lichtempfindlichen Fläche 112 einen Versatz δx erhalten. Dafür muss aber der Versatz δx zum Einfallswinkel passen. Das erfordert ein sehr teures spezielles Design, das zudem für jede Sensorvariante erneut vorgenommen werden muss. Das Licht, das die lichtempfindliche Fläche 112 verfehlt, reduziert nicht nur die Lichtempfindlichkeit des Bildsensors, sondern erzeugt auch noch Streulicht, das die Bildaufnahme weiter verschlechtert.

Ein weiterer negativer Effekt des schrägen Lichteinfalls ist die mehrfache Reflexion in einer Glasabdeckung. Bei senkrechtem Lichteinfall tritt das nicht auf, es gibt dann lediglich einen unschädlichen Rückreflex in Richtung der Lichtquelle, der den Bildsensor nicht trifft. Auch Antireflexbeschichtungen zeigen eine Winkelabhängigkeit.

In der Arbeit Howard, James W.: "Formulas for the coma and astigmatism of wedge prisms used in converging light", Applied optics 24.23 (1985): 4265-4268 werden verschiedene Einsatzmöglichkeiten von Keilprismen erörtert. Unter anderem können sie dafür genutzt werden, die Bildebene zu kippen oder deren Neigung zu korrigieren. Allerdings ist dieser Effekt stets von Aberrationen begleitet. Sie können entweder kein Koma oder keinen Astigmatismus aufweisen, aber niemals beides verhindern. Die Verwendung bei der Lasertriangulation, die ohnehin in der Arbeit nicht angesprochen ist, würde daher zusätzliche Messfehler einführen.

Die Arbeit von Reshef, Orad, et al. "An optic to replace space and its application towards ultra-thin imaging systems", Nature communications 12.1 (2021): 1-8 befasst sich ohne jeden Zusammenhang mit Lasertriangulation mit sogenannten Metalinsen und Spaceplates. Metalinsen sind extrem dünne optische Elemente mit Linseneffekt, die spezielle Nanostrukturen aufweisen, um Strahlwege zu beeinflussen. Spaceplates wiederum zielen mit ähnlichen Technologien auf den Bereich zwischen den Linsen, denn auch mehrere Metalinsen müssen zunächst wie klassische Linsen einen Abstand zueinander einhalten. Diesen Abstand sollen die Spaceplates verringern, um die Bautiefe einer Optik weiter reduzieren zu können. Ein besonderes Verfahren zur Erzeugung derartiger Nanostrukturen ist die Nanoprägelithografie (Nanoimprinting).

Die DE 10 2021 119 423 A1 offenbart einen Triangulationstaster, der in seinem Empfangspfad ein optisches Metaelement einsetzt, um verschiedene ungünstige Triangulationseffekte auszugleichen. Ein solcher Triangulationstaster misst nur skalar oder eindimensional, das darf nicht mit einer gattungsgemäßen Kamera zur Aufnahme von 3D-Bilddaten mit einem Lichtschnittverfahren beziehungsweise der Lasertriangulation verwechselt werden. Kameraspezifische Fragestellungen wie eine Scheimpfluganordnung und Optimierung in beiden Achsen eines Bildsensors treten bei der DE 10 2021 119 423 A1 gar nicht auf. In der DE 10 2021 122 418 A1 wird speziell die Verschiebung des Empfangslichtflecks im Nahbereich durch ein optisches Metaelement begrenzt.

In der US 2019/0170314 A1 wird eine LARP-Vorrichtung (Laser Activated Remote Phosphor) vorgestellt. Dabei werden in verschiedenen Ausführungsformen ein Keilprisma, eine Metalinse und eine Scheimpfluganordnung genannt, ohne dies aber miteinander in engeren Zusammenhang zu bringen. Mit einer Lasertriangulation hat das Dokument nichts zu tun.

Die US 10 746 529 B1 offenbart eine optische Vorrichtung zur Messung eines Versatzes mit einem Bildsensor und einer Empfangslinse in Scheimpfluganordnung nach einem Lichtschnittverfahren. Zur Unterdrückung von Reflexen wird das Deckglas mit einem Versatz und in einem Winkel zu dem Bildsensor angeordnet.

Es ist daher Aufgabe der Erfindung, die Erfassung von 3D-Bilddaten mit einem Lichtschnittverfahren zu verbessern.

Diese Aufgabe wird durch eine Kamera und ein Verfahren zur Aufnahme von 3D-Bilddaten mit einem Lichtschnittverfahren nach Anspruch 1 beziehungsweise 15 gelöst. Mit Lichtschnittverfahren ist allgemein die Erfassung von 3D-Bilddaten aus Verzerrungen eines projizierten Lichtmusters durch die Objektkonturen mittels Triangulation und insbesondere Lasertriangulation gemeint, in der als Lichtmuster eine Lichtlinie projiziert wird. Eine Lichtquelle, insbesondere ein Laser, projiziert das Lichtmuster oder die Lichtlinie in einer Fokalebene. Ein Bildsensor mit einer Vielzahl von Lichtempfangselementen oder Pixeln, die typischerweise zu einer Matrix angeordnet sind, nimmt das Lichtmuster auf den davon getroffenen Objekten auf. Dem Bildsensor ist eine Empfangsoptik mit einer Objektivebene vorgeordnet. Eine Steuer- und Auswertungseinheit wertet das aufgenommene Profil des Lichtmusters aus, um die 3D-Bilddaten zu bestimmen. Die Bildebene ist gegenüber der Fokalebene verkippt.

Die Erfindung geht von dem Grundgedanken aus, in der Empfangsoptik mindestens ein optisches Metaelement vorzusehen. Damit wird ein schräger Lichteinfall auf die Lichtempfangselemente ausgeglichen. Der schräge Lichteinfall ergibt sich insbesondere, wie einleitend diskutiert, aus der Verkippung zwischen Bildebene und Fokalebene und/oder einem jeweiligen Hauptstrahlwinkel. Das Metaelement wirkt je nach Ausführungsform in verschiedener Weise auf das remittierte Lichtbündel und ersetzt und/oder ergänzt die Empfangsoptik. Das Metaelement weist dafür eine Metaoberfläche und/oder ein Metamaterial auf, d.h. Nanostrukturen, die ganz gezielt bestimmte Wellenfronten des remittierten Lichtbündels formen. Bei einer Metaoberfläche sind solche Nanostrukturen an der Oberfläche vorgesehen, ein Metamaterial erreicht entsprechende Eigenschaften durch die Nanostruktur eines Schichtsystems oder eines Vollkörpers.

Die Erfindung hat den Vorteil, dass kleinere Einfallswinkel auf den Bildsensor realisiert werden können. Das verbessert die Lichtempfindlichkeit, und weiterhin werden je nach Ausführungsform störende Nebeneffekte einer Scheimpfluganordnung abgemildert, oder die Vorzüge einer Scheimpfluganordnung werden sogar ohne tatsächliche Scheimpfluganordnung erreicht, was dann wiederum kompaktere Bauformen ermöglicht und die Herstellung vereinfacht. In einigen Ausführungsformen kann die Höhenauflösung linearisiert werden. Das optische Metaelement erleichtert die Variantenbildung, da für andere Bauformen oder andere Fokusebenen lediglich ein anderes Metaelement eingesetzt werden muss oder das Metaelement sogar an die andere Bauform anpassbar ist beziehungsweise in der anderen Bauform ebenfalls seine Funktion erfüllen kann. Das optische Metaelement kann die Aufgaben der Empfangsoptik mit kleineren Linsenfehlern leisten oder Linsenfehler eines weiterhin in der Empfangsoptik eingesetzten Objektivs ausgleichen. Die einleitend erwähnten Mehrfachreflexionen in einer Glasabdeckung lassen sich dank des optischen Metaelements vermeiden.

Das Metaelement erzeugt vorzugsweise einen Prismeneffekt. Dadurch wird der Einfallswinkel des einfallenden Empfangslichts verändert, ehe es auf den Bildsensor fällt. Ein schräger Lichteinfall auf den Bildsensor wird somit zu einem senkrechten Lichteinfall oder jedenfalls ein schräger Einfallswinkel in Richtung eines senkrechten Lichteinfalls verringert.

Das Metaelement weist bevorzugt über die Lichtempfangselemente hinweg einen unterschiedlichen optischen Effekt auf. Eine individuelle Kompensation je Lichtempfangselement kann in dem Metaelement berücksichtigt werden, wäre jedoch mit klassischen Mitteln gar nicht umsetzbar. Es ist denkbar, gezielt für Gruppen von Lichtempfangselementen, wie Zeilen oder Spalten, in dem Metaelement in einer innerhalb der jeweiligen Gruppe gleichen Weise zu kompensieren.

Die Empfangsoptik weist bevorzugt ein dem Bildsensor vorgeordnetes Mikrolinsenarray auf. Dadurch lassen sich die Effekte eines Mikrolinsenarrays zum Bündeln von Empfangslicht auf die lichtempfindlichen Bereiche des Bildsensors und des erfindungsgemäß vorgesehenen optischen Metaelements miteinander kombinieren.

Die Mikrolinsen des Mikrolinsenarrays weisen bevorzugt einen Versatz gegenüber den Lichtempfangselementen auf. Der Versatz dient herkömmlich dazu, den schrägen Lichteinfall auszugleichen, was erfindungsgemäß das optische Metaelement leistet. Deshalb kann ein Standard-Mikrolinsenarray ohne Versatz eingesetzt werden, und das hat Vorteile hinsichtlich der flexiblen Einsatzmöglichkeiten in verschiedenen Varianten der Kamera und der Kosten. Dennoch bleibt diese Ausführungsform mit einer Kombination von Versatz der Mikrolinsen und Verwendung eines Metaelements möglich.

Das Metaelement sorgt bevorzugt für einen senkrechten Lichteinfall in die jeweilige Mikrolinse. Damit ist sogar ein vollständiger Ausgleich des schrägen Lichteinfalls erreicht.

Das Metaelement weist bevorzugt zusätzlich die Funktion eines Mikrolinsenfeldes auf. In dieser Ausführungsform kann auf ein Mikrolinsenfeld verzichtet und dennoch ein vergleichbarer optischer Effekt der Bündelung auf den jeweiligen lichtempfindlichen Bereich eines Lichtempfangselements erzielt werden. Das Metaelement sorgt selbst, neben dem Ausgleich des schrägen Lichteinfalls, für eine entsprechende Fokussierung auf die lichtempfindlichen Bereiche des Bildsensors.

In weiteren denkbaren Kombinationen ersetzt das Metaelement die Funktion des Mikrolinsenfeldes nur teilweise, so dass Mikrolinsenfeld und Metaelement einander ergänzen. Weiterhin ist denkbar, dass zwei oder mehr Metaelemente sich die jeweilige geforderte optische Funktionalität aufteilen.

Die Empfangsoptik weist bevorzugt eine Empfangslinse auf. In solchen Ausführungsformen gibt es also weiterhin eine klassische Empfangslinse beziehungsweise ein klassisches Empfangsobjektiv.

Der Bildsensor ist vorzugsweise in einer Scheimpfluganordnung gegen die Empfangslinse verkippt. Die Bildebene, eine Objektivebene der Empfangslinse und die Fokalebene schneiden einander folglich in einer gemeinsamen Geraden. Das optische Metaelement sorgt dafür, dass trotz der Verkippungen des Bildsensors das Empfangslicht jeweils möglichst senkrecht auf die Lichtempfangselemente trifft.

Der Bildsensor und die Empfangslinse sind vorzugsweise derart zueinander angeordnet, dass Bildebene und Objektivebene parallel liegen. Hier wird als Alternative in einer physischen Betrachtung die Scheimpfluganordnung vermieden. Das optische Metaelement emuliert jedoch die vorteilhaften optischen Effekte der Scheimpfluganordnung.

Das Metaelement ist bevorzugt dafür ausgebildet, Licht aus der Fokalebene auf den Bildsensor zu bündeln. Damit übernimmt das optische Metaelement die Funktion der Empfangslinse vorzugsweise allein oder alternativ in Kombination mit der Empfangslinse beziehungsweise als Teil einer Empfangsoptik. Wie schon erwähnt, kann es mehrere Metaelemente geben, beispielsweise ein Metaelement für die Funktion der Empfangslinse und ein weiteres Metaelement zum Ausgleich des schrägen Lichteinfalls, oder ein einziges Metaelement leistet beides.

Das Metaelement ist bevorzugt ein aktives Metaelement. Darunter ist ein Metaelement zu verstehen, das in seinen optischen Eigenschaften anpassbar ist. Somit kann es für eine bestimmte Fokalebene beziehungsweise Verkippung ebenso wie für bestimmte Kameras oder Aufnahmesituationen adaptiert werden. Dadurch müssen nicht mehrere Metaelemente beispielsweise für Varianten der Kamera oder bestimmte Anwendungen hergestellt werden, beziehungsweise zumindest in gewissem Rahmen sind Varianten der Kamera überhaupt durch eine Anpassung mittels aktivem Metaelement verzichtbar.

Die Empfangsoptik weist bevorzugt eine Spaceplate auf. Ein deutscher Fachbegriff hat sich hierfür noch nicht herausgebildet. Eine Spaceplate ist ebenfalls ein Metamaterial, aber nicht primär auf eine Veränderung der Wellenfront entsprechend einem Verkippungs- oder Linseneffekt angelegt. Vielmehr soll gleichsam ein längerer Lichtweg auf kleinerem physischem Raum verwirklicht werden, um optische Elemente, insbesondere Metalinsen, näher beieinander anordnen zu können. Insbesondere ist vorstellbar, eine Vorder- und/oder Rückseite der Spaceplate mit einer Metaoberfläche zu versehen, um die Effekte einer Spaceplate mit denjenigen des optischen Metaelements zu kombinieren. Eine Spaceplate ermöglicht einen besonders kompakten Aufbau in Ausführungsformen, in denen das optische Metaelement eine Doppelfunktion auch als Empfangslinse übernimmt. Für weitere Einzelheiten zu Spaceplates wird ergänzend auf die einleitend genannte Arbeit von Reshef et al. verwiesen.

Das Metaelement ist bevorzugt für eine multifokale Bildaufnahme ausgebildet. Dadurch können verschiedene Fokalebenen in unterschiedlicher Verkippung scharf erfasst werden. Dies ist für die Erfassung mehrerer interessierender Bereiche (ROI, region of interest) von Interesse, insbesondere im Falle mehrerer Laserlinien oder bei der Verwendung von Zeilen des Bildsensors für besondere Zwecke, wie einiger Randzeilen als Farbzeilen.

Das Metaelement weist bevorzugt anamorphotische Eigenschaften auf, also unterschiedliche Fokuseigenschaften in den beiden Achsen des Bildsensors. Dafür würden mit klassischen optischen Mitteln zusätzliche Linsen mit entsprechendem Bauraum und Kosten benötigt. Das Metaelement kann derartige Anforderungen bei Bedarf mit erfüllen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Übersichtsdarstellung einer Kamera zur 3D-Bildaufnahme nach einem Lichtschnittverfahren beziehungsweise mittels Lasertriangulation und ihres Erfassungsbereichs;
- Fig. 2: eine schematische Darstellung einer Ausführungsform der Kamera in Scheimpfluganordnung zum Ausgleich des schrägen Lichteinfalls durch ein optisches Metaelement;
- Fig. 3: eine schematische Darstellung einer Ausführungsform der Kamera ohne physische Scheimpfluganordnung, jedoch mit vergleichbarer optischer Wirkung mittels eines optischen Metaelements;
- Fig. 4: eine schematische Darstellung einer Ausführungsform der Kamera, in der das optische Metaelement zusätzlich die Funktion der Empfangslinse übernimmt;
- Fig. 5: eine schematische Darstellung einer Ausführungsform der Kamera mit zusätzlicher Spaceplate;
- Fig. 6: eine schematische Darstellung einer Ausführungsform der Kamera mit mehreren projizierten Beleuchtungslinien und Aufnahmebereichen;
- Fig. 7: eine schematische Darstellung einer multifokalen Ausführungsform der Kamera;
- Fig. 8: eine schematische Darstellung der herkömmlichen Scheimpfluganordnung; und
- Fig. 9: eine schematische Darstellung der herkömmlichen Verwendung von Mikrolinsen, insbesondere versetzten Mikrolinsen, vor einem Bildsensor.

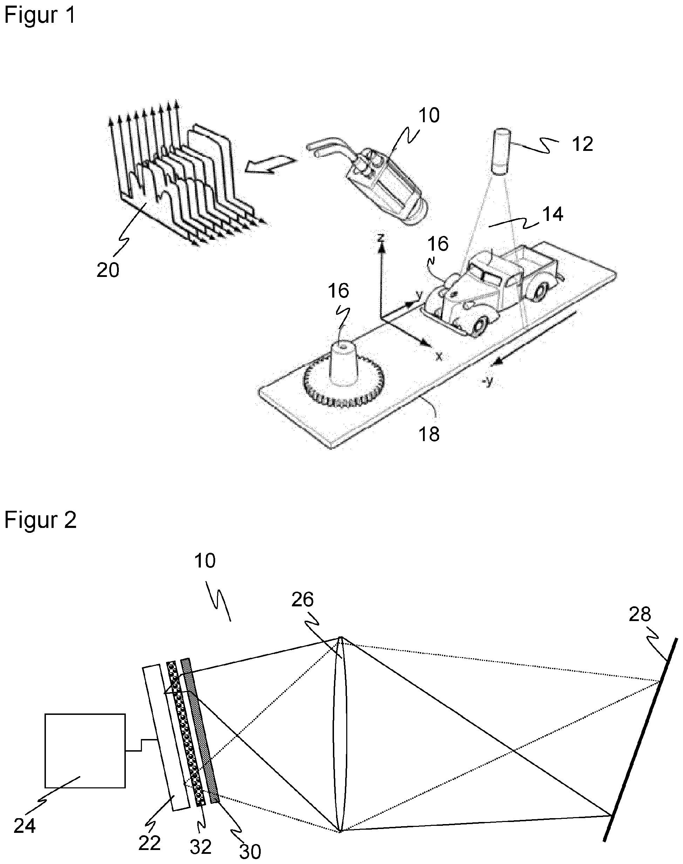

Figur 1 zeigt eine Übersichtsdarstellung einer Kamera 10 zur 3D-Bildaufnahme nach einem Lichtschnittverfahren beziehungsweise mittels Lasertriangulation in einer beispielhaften Aufnahmesituation. Das Prinzip der Lasertriangulation ist an sich bekannt und wird daher nur kurz vorgestellt. Eine Beleuchtungseinheit 12 erzeugt einen Lichtfächer 14 in einer Fokalebene und projiziert damit letztlich eine Lichtlinie auf das zu erfassende Objekt 16. Die dreidimensionale Kontur des Objekts 16 verzerrt die Lichtlinie. In einer Aufnahme der Kamera 10 wird die Form der Lichtlinie ausgewertet, um in Kenntnis der geometrischen Anordnung und Eigenschaften von Kamera 10 und Beleuchtungseinheit 12 auf die dreidimensionale Kontur zurückzuschließen. Dabei entsteht je Aufnahme nur ein zweidimensionales Höhenprofil entsprechend dem Objektabschnitt unter der Lichtlinie. Mittels Relativbewegung, beispielsweise eines Förderbandes 18, wird die Lichtlinie nach und nach über das Objekt 16 geführt. Dadurch ergeben sich dann durch sukzessives Zusammensetzen der zweidimensionalen Höhenprofile die 3D-Bilddaten 20.

Figur 2 zeigt eine schematische Darstellung einer Ausführungsform der Kamera 10 in Scheimpfluganordnung. Von der Kamera 10 sind vereinfachend lediglich ihre noch zu erläuternde Empfangsoptik, ein Bildsensor 22 mit den nicht einzeln gezeigten Lichtempfangselementen oder Pixeln sowie eine Steuer- und Auswertungseinheit 24 dargestellt, in der die Triangulationsauswertung stattfindet. Die Steuer- und Auswertungseinheit 24 kann eine interne Recheneinheit, eine externe Recheneinheit oder eine Kombination aus beidem sein. Beispiele für eine interne Recheneinheit sind digitale Rechenbausteine wie ein Mikroprozessor oder eine CPU (Central Processing Unit), ein FPGA (Field Programmable Gate Array), ein DSP (Digital Signal Processor), ein ASIC (Application-Specific Integrated Circuit), ein Kl-Prozessor, eine NPU (Neural Processing Unit), eine GPU (Graphics Processing Unit) oder dergleichen. Eine externe Recheneinheit kann eine Steuerung oder ein Computer beliebiger Bauart einschließlich Notebooks, Smartphones, Tablets ebenso sein wie ein lokales Netzwerk, ein Edge-Device oder eine Cloud.

Die Kamera 10 ist in dieser Ausführungsform in einer Scheimpfluganordnung aufgebaut. Stellvertretend für das Empfangsobjektiv ist eine einzelne Empfangslinse 26 eingezeichnet. Scheimpfluganordnung bedeutet, wie bereits einleitend zu Figur 8 erläutert, dass die Bildebene des Bildsensors 22, die Objektivebene der Empfangslinse 26 und die Fokalebene 28 einander in einer gemeinsamen Geraden schneiden. Als notwendige, nicht hinreichende Bedingung dafür ist die Fokalebene 28 zur Bildebene verkippt.

Zum Ausgleich des schrägen Lichteinfalls auf den Bildsensor 22 ist ein dem Bildsensor 22 vorgeordnetes optisches Metaelement 30 vorgesehen. Zusätzlich kann optional ein Mikrolinsenfeld 32 eingesetzt werden, vorzugsweise zwischen optischem Metaelement 30 und Bildsensor 22. Die Mikrolinsen können wie in Figur 9a ein Standardbauteil mit zentrierten Mikrolinsen oder wie in Figur 9c mit einem Versatz ausgestattet sein, wobei letzteres wegen des optischen Metaelements 30 nicht mehr erforderlich, nichtsdestotrotz aber möglich ist, beispielsweise indem Versatz und optisches Metaelement 30 den erforderlichen Winkelausgleich untereinander aufteilen.

Das optische Metaelement 30 weist ein Metamaterial oder eine Metaoberfläche auf, letztere vorzugsweise durch Nanoprägelithografie (Nanoimprinting) erzeugt. Herkömmliche optische Komponenten wie Linsen, Prismen, Wellenplatten oder Hologramme beruhen auf der Lichtausbreitung über Entfernungen, die viel größer als die Wellenlänge des Lichtfächers 14 sind, um Wellenfronten zu formen. Auf diese Weise werden entlang des Strahlengangs nach und nach wesentliche Änderungen der Amplitude, Phase oder Polarisation von Lichtwellen akkumuliert. Das optische Metaelement 30 hingegen weist Strukturen auf, die als Miniatur-Anisotrop-Lichtstreuer oder Resonatoren beziehungsweise optische Antennen aufgefasst werden können. Diese Strukturen haben Abmessungen und Abstände im Nanometerbereich, viel kleiner als die Wellenlänge des Lichtfächers 14. Dadurch formt das optische Metaelement 30 nach dem Huygens-Prinzip optische Wellenfronten in beliebige Formen mit Subwellenlängenauflösung, indem die Nanostrukturen räumliche Variationen in der optischen Reaktion der Lichtstreuer einführen. Damit lassen sich optische Effekte insbesondere auch von Linsen oder Prismen nachempfinden. Eine Besonderheit ist die hohe Flexibilität, durch angepasste Nanostrukturen eine gewünschte Ausgangswellenfront und damit verschiedenste optische Effekt zu erreichen. Je nach Wellenlängenbereich werden Materialien mit einem geeigneten Transmissionsverhalten verwendet, beispielsweise Titandioxid, Siliziumnitrid oder Galliumphosphid im sichtbaren und Aluminiumnitrid im ultravioletten Spektralbereich sowie Chalkogenid-Legierungen im mittleren und Silizium im langwelligen Infrarotbereich.

Von dem optischen Metaelement 30 wird in der Kamera 10 ein Ausgleich eines Einfallswinkels des Empfangslichts auf den Bildsensor 22 erwartet, insbesondere individuell je Lichtempfangselement. Das ist vergleichbar mit der Wirkung von Keilprismen, aber in einem Metamaterial ist dieser Effekt ohne Aberrationen erreichbar. Die nachgeahmten Keilprismen können je individuellem Lichtempfangselement einen eigenen Ablenkungswinkel einstellen und so für einen senkrechten Lichteinfall auf das Lichtempfangselement sorgen. Dabei kann der schräge Lichteinfall aufgrund der Scheimpfluganordnung und/oder ein vom Ort auf dem Bildsensor abhängiger Hauptstrahlwinkel kompensiert werden. Unter Vorgabe dieser konkreten optischen Wirkung lässt sich die erforderliche Nanostruktur berechnen und erzeugen. Mit klassischen optischen Elementen wäre eine solche Kompensation in der Strukturgröße einzelner Pixel unmöglich. Das optische Metaelement 30 kann zudem einfach ausgetauscht werden, um eine andere Kameravariante beziehungsweise Anwendungssituation abzubilden. Die geforderten optischen Wirkungen können in einem einzigen optischen Metaelement 30 verwirklicht werden wie dargestellt oder alternativ auf zwei oder mehr optische Metaelemente verteilt werden.

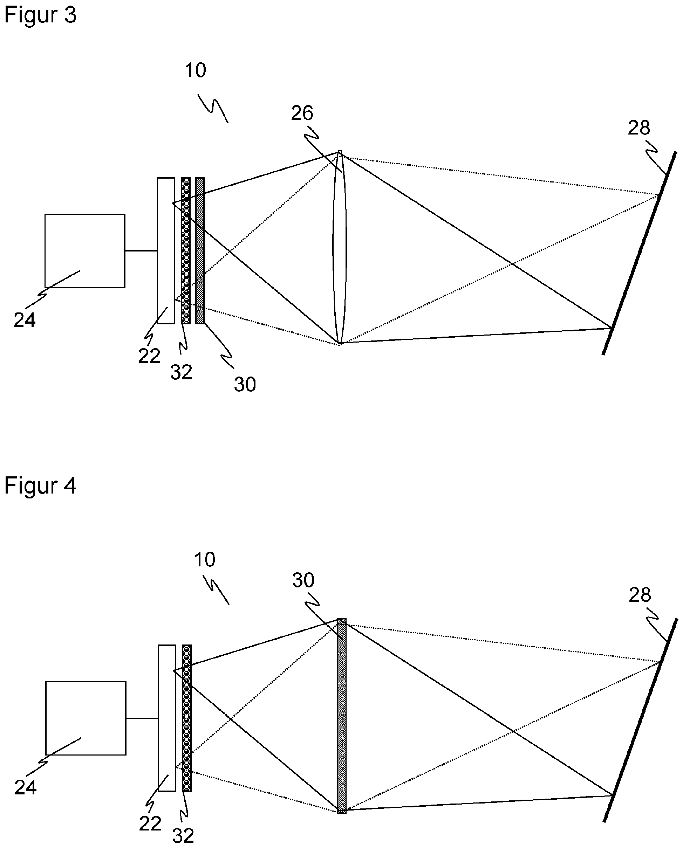

Figur 3 zeigt eine schematische Darstellung einer Ausführungsform der Kamera 10 ohne physische Scheimpfluganordnung, jedoch mit vergleichbarer optischer Wirkung mittels eines optischen Metaelements 30. Der optische Effekt der Scheimpfluganordnung ist eine Variation der Bildweite, d.h. des Abstands zwischen der bildseitigen Hauptebene und dem Bildsensor 22 über dessen Lichtempfangselemente hinweg. Das dient dazu, die Auswirkungen einer schrägen Objektebene und somit eine variierende Objektweite auszugleichen. Eine scharfe Aufnahme bei variierender Objektweite kann statt durch die physische Scheimpfluganordnung auch durch eine veränderte Fokuslage über den Bildsensor 22 hinweg erreicht werden. Dementsprechend ist das optische Metaelement 30 in dieser Ausführungsform ausgebildet: Es erzeugt je Lichtempfangselement eine Fokuslage, die einer physischen Schräglage des Bildsensors 22 in einer Scheimpfluganordnung entspricht. Eine Variation der Fokuslage durch das optische Metaelement 30 ist individuell je Lichtempfangselement möglich, aber vorzugsweise nur über die Höhenrichtung vorgenommen, d.h. derselben Richtung, in der auch die Fokalebene 28 zur Bildebene des Bildsensors 22 verkippt ist. Das kann als emulierte Scheimpfluganordnung mittels optischem Metaelement 30 bezeichnet werden. Ergänzend ist denkbar, in dem optischen Metaelement 30 den Hauptstrahlwinkel je Lichtempfangselement auszugleichen, entsprechend der optischen Wirkung versetzter Mikrolinsen. Diesbezüglich wird auf die Erläuterungen zu der Ausführungsform gemäß Figur 2 verwiesen. Die Funktionen einer emulierten Scheimpfluganordnung und eines Ausgleichs des Hauptstrahlwinkels können auf zwei oder mehr optische Metaelemente verteilt oder in einem einzigen optischen Metaelement 30 verwirklicht werden.

Figur 4 zeigt eine schematische Darstellung einer weiteren Ausführungsform der Kamera 10. Im Unterschied zu Figur 3 übernimmt das optische Metaelement 30 hier zusätzlich die Funktion der Empfangslinse 26 beziehungsweise des Empfangsobjektivs und ist dementsprechend in größerem Abstand zum Bildsensor 22 in etwa in der Position der ersetzten Empfangslinse 26 angeordnet. Das optische Metaelement 30 erhält also zusätzliche fokussierende Eigenschaften als Metalinse, wie die ersetzte Empfangslinse 26. Dieser Fokussierung überlagert ist die zu Figur 3 beschriebene Funktion einer emulierten Scheimpfluganordnung insbesondere in Kombination mit einem Ausgleich des Hauptstrahlwinkels. Erneut können die verschiedenen optischen Funktionen in einem einzigen optischen Metaelement 30 realisiert werden oder auf mindestens zwei optische Metaelemente verteilt werden, hier insbesondere mit einer Position eines weiteren optischen Metaelements nahe am Bildsensor 22. Als zusätzliche optische Funktion desselben optischen Metaelements 30 oder eines weiteren optischen Metaelements kann die Höhenauflösung linearisiert werden, wie dies in den einleitend zitierten Dokumenten DE 10 2021 119 423 A1 und DE 10 2021 122 418 A1 beschrieben ist, nun übertragen von dem herkömmlichen eindimensionalen Taster auf die Kamera 10.

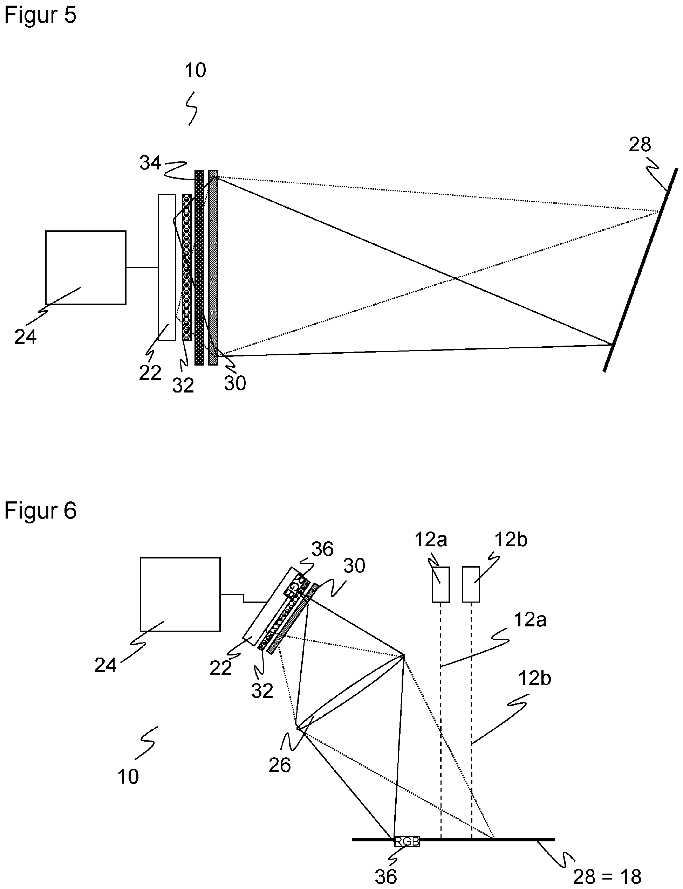

Figur 5 zeigt eine schematische Darstellung einer Ausführungsform der Kamera 10. In Figur 4 muss das optische Metaelement 30, das die Empfangslinse 26 ersetzt, in Abstand zu dem Bildsensor 22 angeordnet werden. Für einen kompakteren Aufbau ist nun eine Spaceplate 34 ergänzt. Wie einleitend schon kurz erläutert, ist eine Spaceplate 34 ein besonderes optisches Metaelement, das einen längeren Lichtweg durch die Luft auf ganz engem Raum zu ersetzen vermag. Dank der Spaceplate 34 ist demnach doch wieder möglich, das optische Metaelement 30 ganz nahe bei dem Bildsensor 22 anzuordnen. Die gesamte Empfangsoptik ist so in minimaler Bautiefe als eine Art Sandwich von Bildsensor 22, optionalem Mikrolinsenfeld 32, Spaceplate 34 und optischem Metaelement 30 realisierbar, insbesondere in einem monolithischen Aufbau. Eine Spaceplate kann auch in den anderen Ausführungsformen eingesetzt werden, erreicht aber dort wegen der weiter vorhandenen klassischen Empfangslinse 26 nicht dieselbe Kompaktheit.

Figur 6 zeigt eine schematische Darstellung einer Ausführungsform der Kamera 10 in einer Anordnung, die als umgekehrte Scheimpfluganordnung bezeichnet werden kann. Das ist insbesondere für den Fall mehrerer Aufnahmebereiche geeignet, im dargestellten Beispiel sind es zwei Laserlinien zweier Beleuchtungseinheiten 12a-b und RGB-Bereiche 36. Die beiden Laserlinien sind vorzugsweise in einer Förderrichtung zueinander versetzt, um Mehrfachmessungen zu ermöglichen. Die Fokalebene ist in diesem Fall nicht die Ebene des ohnehin nicht mehr eindeutigen Lichtfächers 14a-b, sondern eine Grundebene der Objekte wie die Oberfläche des Förderbandes 18. Die gezeigte Anordnung eignet sich vor allem für flache Objekte etwa bei der Prüfung von Holz.

Figur 7 zeigt eine schematische Darstellung einer multifokalen Ausführungsform der Kamera 10. Das lehnt sich an die zu Figur 3 erläuterte Ausführungsform an und kann auf die anderen Ausführungsformen übertragen werden. Das optische Metaelement 30 unterstützt mehrere Fokuslagen, so dass mehrere interessierende Bereiche mit unterschiedlichen Triangulationsparametern beziehungsweise Fokalebenen 28a-b erfasst werden können. Damit ist beispielsweise eine zeilenweise Farbaufnahme zusätzlich zu der Lasertriangulation ermöglicht. Auch kann so die umgekehrte Scheimpfluganordnung gemäß Figur 6 für verschiedene Objektabstände beziehungsweise Objekthöhen und nicht lediglich flache Objekte verwendet werden.

Als eine weitere Variante ohne eigene Figur ist denkbar, der Empfangsoptik über das optische Metaelement 30 anamorphotische Eigenschaften zu geben, also unterschiedliche Fokuseigenschaften in den beiden Achsen des Bildsensors 22. Das ist insbesondere für die Ausführungsform gemäß Figur 4 geeignet. Über anamorphotische Eigenschaften kann beispielsweise ein Bild bei gleicher Höhe in der Breite komprimiert oder gestreckt werden. Mit klassischen Linsen wäre das nur mit sehr hohem Aufwand durch weitere Linsen und den dafür erforderlichen zusätzlichen Bauraum möglich.

## Patentansprüche

1. Kamera (10) zur Aufnahme von 3D-Bilddaten (20) mit einem Lichtschnittverfahren, die eine Beleuchtungseinheit (12) zum Projizieren eines Lichtmusters (14) in einer Fokalebene (28), einen Bildsensor (22) mit einer Vielzahl von Lichtempfangselementen in einer Bildebene, eine dem Bildsensor (22) vorgeordnete Empfangsoptik (26) mit einer Objektivebene sowie eine Steuer- und Auswertungseinheit (24) aufweist, die dafür ausgebildet ist, die 3D-Bilddaten (20) durch Auswertung des Lichtmusters (14) in einer Aufnahme des Bildsensors (22) zu erzeugen, wobei die Bildebene gegenüber der Fokalebene (28) verkippt ist,
**dadurch gekennzeichnet,**
**dass** die Empfangsoptik (26) mindestens ein optisches Metaelement (30) aufweist, das einen schrägen Lichteinfall auf die Lichtempfangselemente ausgleicht, um kleinere Einfallswinkel auf den Bildsensor (22) zu realisieren und so störende Nebeneffekte eine Scheimpfluganordnung abzumildern oder die Vorzüge einer Scheimpfluganordnung ohne tatsächliche Scheimpfluganordnung zu erreichen.

2. Kamera (10) nach Anspruch 1,
wobei das Metaelement (30) einen Prismeneffekt erzeugt.

3. Kamera (10) nach Anspruch 1 oder 2,
wobei das Metaelement (30) über die Lichtempfangselemente hinweg einen unterschiedlichen optischen Effekt aufweist.

4. Kamera (10) nach einem der vorhergehenden Ansprüche,
wobei die Empfangsoptik (26) ein dem Bildsensor (22) vorgeordnetes Mikrolinsenarray (32) aufweist.

5. Kamera (10) nach Anspruch 4,
wobei die Mikrolinsen des Mikrolinsenarrays (32) einen Versatz gegenüber den Lichtempfangselementen aufweisen.

6. Kamera (10) nach Anspruch 4 oder 5,
wobei das Metaelement (30) für einen senkrechten Lichteinfall in die jeweilige Mikrolinse sorgt.

7. Kamera (10) nach einem der vorhergehenden Ansprüche,
wobei das Metaelement (30) zusätzlich die Funktion eines Mikrolinsenfeldes aufweist.

8. Kamera (10) nach einem der vorhergehenden Ansprüche,
wobei die Empfangsoptik eine Empfangslinse (26) aufweist.

9. Kamera (10) nach Anspruch 8,
wobei der Bildsensor (22) in einer Scheimpfluganordnung gegen die Empfangslinse (26) verkippt ist.

10. Kamera (10) nach Anspruch 8 oder 9,
wobei der Bildsensor (22) und die Empfangslinse (26) derart zueinander angeordnet sind, dass Bildebene und Objektivebene parallel liegen.

11. Kamera (10) nach einem der vorhergehenden Ansprüche,
wobei das Metaelement (30) dafür ausgebildet ist, Licht aus der Fokalebene (28) auf den Bildsensor (22) zu bündeln.

12. Kamera (10) nach einem der vorhergehenden Ansprüche,
wobei das Metaelement (30) ein aktives Metaelement ist, das in seinen optischen Eigenschaften anpassbar ist.

13. Kamera (10) nach einem der vorhergehenden Ansprüche,
wobei die Empfangsoptik (26) eine Spaceplate (34) aufweist.

14. Kamera (10) nach einem der vorhergehenden Ansprüche,
wobei das Metaelement (30) für eine multifokale Bildaufnahme ausgebildet ist und/oder wobei das Metaelement (30) anamorphotische Eigenschaften aufweist.

15. Verfahren zur Aufnahme von 3D-Bilddaten (20) nach dem Prinzip des Lichtschnittverfahrens, bei dem ein Lichtmuster (14) in einer Fokalebene (28) projiziert wird, ein Bildsensor (22) mit einer Vielzahl von Lichtempfangselementen in einer Bildebene durch eine dem Bildsensor (22) vorgeordnete Empfangsoptik (26) mit einer Objektivebene das Lichtmuster (14) aufnimmt und das aufgenommene Lichtmuster (14) ausgewertet wird, um die 3D-Bilddaten (20) zu erzeugen, wobei die Bildebene gegenüber der Fokalebene (28) verkippt ist, **dadurch gekennzeichnet,**
**dass** die Empfangsoptik (26) mindestens ein optisches Metaelement (30) aufweist, das einen schrägen Lichteinfall auf die Lichtempfangselemente ausgleicht, um kleinere Einfallswinkel auf den Bildsensor (22) zu realisieren und so störende Nebeneffekte eine Scheimpfluganordnung abzumildern oder die Vorzüge einer Scheimpfluganordnung ohne tatsächliche Scheimpfluganordnung zu erreichen.

## Claims

1. A camera (10) for recording 3D image data (20) using a light sectioning process that has an illumination unit (12) to project a light pattern (14) in a focal plane (28), an image sensor (22) having a plurality of light reception elements in an image plane, a reception optics (26) upstream of the image sensor (22) and having an objective plane, and a control and evaluation unit (24) that is configured to generate the 3D image data (20) by evaluating the light pattern (14) in a recording of the image sensor (22), wherein the image plane is tilted with respect to the focal plane (28),
**characterized in that**
the reception optics (26) has at least one metaelement (30) that compensates an oblique light incidence on the light reception elements to implement smaller angles of incidence on the image sensor (22) and thus to alleviate disturbing side effects of a Scheimpflug arrangement or toe achieve the advantages of a Scheimpflug arrangement without an actual Scheimpflug arrangement.

2. A camera (10) in accordance with claim 1,
wherein the metaelement (30) generates a prismatic effect.

3. A camera (10) in accordance with claim 1 or claim 2,
wherein the metaelement (30) has a different optical effect over the light reception elements.

4. A camera (10) in accordance with any one of the preceding claims,
wherein the reception optics (26) has a microlens array (32) upstream of the image sensor (22).

5. A camera (10) in accordance with claim 4,
wherein the microlenses of the microlens array (32) have an offset with respect to the light reception elements.

6. A camera (10) in accordance with claim 4 or claim 5,
wherein the metaelement (30) provides a perpendicular light incidence in the respective microlens.

7. A camera (10) in accordance with any one of the preceding claims, wherein the metaelement (30) additionally has the function of a microlens field.

8. A camera (10) in accordance with any one of the preceding claims, wherein the reception optics has a reception lens (26).

9. A camera (10) in accordance with claim 8,
wherein the image sensor (22) is tilted with respect to the reception lens (26) in a Scheimpflug arrangement.

10. A camera (10) in accordance with claim 8 or claim 9,
wherein the image sensor (22) and the reception lens (26) are arranged with respect to one another such that the image plane and the objective plane are in parallel.

11. A camera (10) in accordance with any one of the preceding claims, wherein the metaelement (30) is configured to bundle light from the focal plane (28) on the image sensor (22).

12. A camera (10) in accordance with any one of the preceding claims, wherein the metaelement (30) is an active metaelement that is adaptable in its optical properties.

13. A camera (10) in accordance with any one of the preceding claims, wherein the reception optics (26) has a spaceplate (34).

14. A camera (10) in accordance with any one of the preceding claims, wherein the metaelement (30) is configured for a multifocal image recording; and/or wherein the metaelement (30) has anamorphic properties.

15. A method of recording 3D image data (20) in accordance with the principle of the light sectioning process, in which a light pattern (14) is projected in a focal plane (28), an image sensor (22) having a plurality of light reception elements in an image plane records the light pattern (14) by a reception optics (26) upstream of the image sensor (22) and having an objective plane, and the recorded light pattern (14) is evaluated to generate the 3D image data (20), wherein the image plane is tilted with respect to the focal plane (28),
**characterized in that**
the reception optics (26) has at least one metaelement (30) that compensates an oblique light incidence on the light reception elements to implement smaller angles of incidence on the image sensor (22) and thus to alleviate disturbing side effects of a Scheimpflug arrangement or toe achieve the advantages of a Scheimpflug arrangement without an actual Scheimpflug arrangemen.t

## Revendications

1. Caméra (10) d'enregistrement de données d'image 3D (20) par une méthode de coupe optique, comprenant une unité d'éclairage (12) pour projeter un motif lumineux (14) dans un plan focal (28), un capteur d'image (22) ayant une pluralité d'éléments de réception de lumière dans un plan d'image, une optique de réception (26) avec un plan d'objectif disposée en amont du capteur d'image (22), ainsi qu'une unité de commande et d'évaluation (24) conçue pour générer les données d'image 3D (20) par évaluation du motif lumineux (14) dans un enregistrement du capteur d'image (22), le plan d'image étant incliné par rapport au plan focal (28), **caractérisé en ce que**
l'optique de réception (26) comprend au moins un méta-élément optique (30) qui compense une incidence oblique de la lumière sur les éléments de réception de lumière, afin de réaliser des angles d'incidence plus petits sur le capteur d'image (22) et d'atténuer ainsi les effets secondaires parasites d'un agencement de Scheimpflug ou d'obtenir les avantages d'un agencement de Scheimpflug, sans agencement de Scheimpflug réel.

2. Caméra (10) selon la revendication 1,
dans laquelle le méta-élément (30) produit un effet de prisme.

3. Caméra (10) selon la revendication 1 ou 2,
dans laquelle le méta-élément (30) présente un effet optique différent sur les éléments de réception de lumière.

4. Caméra (10) selon l'une des revendications précédentes,
dans laquelle l'optique de réception (26) présente un réseau de microlentilles (32) disposé en amont du capteur d'image (22).

5. Caméra (10) selon la revendication 4,
dans laquelle les microlentilles du réseau de microlentilles (32) présentent un décalage par rapport aux éléments de réception de lumière.

6. Caméra (10) selon la revendication 4 ou 5,
dans laquelle le méta-élément (30) assure une incidence perpendiculaire de la lumière sur la microlentille respective.

7. Caméra (10) selon l'une des revendications précédentes,
dans laquelle le méta-élément (30) a en outre la fonction d'un champ de microlentilles.

8. Caméra (10) selon l'une des revendications précédentes,
dans laquelle l'optique de réception comprend une lentille de réception (26).

9. Caméra (10) selon la revendication 8,
dans laquelle le capteur d'image (22) est incliné par rapport à la lentille de réception (26) selon un agencement de Scheimpflug.

10. Caméra (10) selon la revendication 8 ou 9,
dans laquelle le capteur d'image (22) et la lentille de réception (26) sont disposés l'un par rapport à l'autre de telle sorte que le plan de l'image et le plan de l'objectif sont parallèles.

11. Caméra (10) selon l'une des revendications précédentes,
dans laquelle le méta-élément (30) est conçu pour concentrer la lumière provenant du plan focal (28) sur le capteur d'image (22).

12. Caméra (10) selon l'une des revendications précédentes,
dans laquelle le méta-élément (30) est un méta-élément actif dont les propriétés optiques sont adaptables.

13. Caméra (10) selon l'une des revendications précédentes,
dans laquelle l'optique de réception (26) comprend une plaque d'espacement (34).

14. Caméra (10) selon l'une des revendications précédentes,
dans laquelle le méta-élément (30) est conçu pour une prise de vue multifo-cale et/ou le méta-élément (30) présente des propriétés anamorphiques.

15. Procédé d'enregistrement de données d'image 3D (20) selon le principe de la méthode de coupe optique,
dans lequel un motif lumineux (14) est projeté dans un plan focal (28), un capteur d'image (22), muni d'une pluralité d'éléments de réception de lumière dans un plan d'image, enregistre le motif lumineux (14) par une optique de réception (26) avec un plan d'objectif disposée en amont du capteur d'image (22), et le motif lumineux (14) enregistré est évalué pour produire les données d'image 3D (20), le plan d'image étant incliné par rapport au plan focal (28),
**caractérisé en ce que**
l'optique de réception (26) comprend au moins un méta-élément optique (30) qui compense une incidence oblique de la lumière sur les éléments de réception de lumière, afin de réaliser des angles d'incidence plus petits sur le capteur d'image (22) et d'atténuer ainsi les effets secondaires parasites d'un agencement de Scheimpflug ou d'obtenir les avantages d'un agencement de Scheimpflug, sans agencement de Scheimpflug réel.
